# EUROPÄISCHE PATENTSCHRIFT

(11) **EP 0 675 302 B1**
(45) Veröffentlichungstag und Bekanntmachung des Hinweises auf die Patenterteilung: **16.04.1997**
(21) Anmeldenummer: 95102030.4
(22) Anmeldetag: 14.02.1995
(51) Int. Cl.: F16H 57/04, F16H 57/02

(54) **Achsgetriebegehäuse mit einem Deckel für ein Kraftfahrzeug**
Drive axle gear case with a cover for motor vehicles
Carter d'une transmission d'essieu moteur avec un couvercle pour un véhicule automobile

(30) Priorität: 30.03.1994 DE 4410984
(43) Veröffentlichungstag der Anmeldung: 04.10.1995
(73) Patentinhaber: Bayerische Motoren Werke Aktiengesellschaft, 80788 München (DE)
(72) Erfinder: Westermaier, Fritz, D-82387 Antdorf (DE)

(56) Entgegenhaltungen:
- EP-A- 0 076 156
- DE-A- 3 619 754
- FR-A- 1 397 901
- US-A- 4 261 219
- PATENT ABSTRACTS OF JAPAN vol. 017 no. 604 (M-1506) ,8.November 1993 & JP-A-05 180308 (TOYOTA MOTOR CORP) 20.Juli 1993,

## Beschreibung

Die Erfindung betrifft ein Gehäuse für ein Achsgetriebe eines Kraftfahrzeugs mit einem Deckel nach dem Oberbegriff des Hauptanspruchs.

Es ist bereits bekannt, ein Gehäuse für ein Achsgetriebe eines Kraftfahrzeugs so auszubilden, daß es an seiner Rückseite einen Deckel besitzt, dessen Innenwand konkav ausgebildet und durch Rippen in verschiedene Bereiche unterteilt ist. Die Patentschrift US 3 153 464 beschreibt ein Achsgetriebe, dessen Gehäuse an seiner Rückseite einen solchen Deckel aufweist. Die Innenwand des Deckels ist konkav geformt und in vertikaler Richtung besitzt der Deckel eine als Strömungskanal ausgebildete radiale Ausbuchtung in die das Tellerrad hineinragt. Dreht sich das Tellerrad, so wird das aus dem Ölsumpf mitgerissene Öl in diesem Kanal geführt. Ebenso wird ein Teil des von den sich drehenden Achsgetriebeelementen abgeschleuderten Öls in den Kanal geleitet. Das von den nicht im radialen Bereich des Kanals liegenden Achsgetriebeteilen abgeschleuderte Öl benetzt die restliche innere Deckelwand.

Das hat den Nachteil, daß es bei einer solchen Ausführung des Deckels nicht einfach möglich ist, eine Entlüftungseinrichtung für das Achsgetriebe am Deckel vorzusehen. Um ein Austreten von Lecköl aus der Entlüftungseinrichtung zu vermeiden, müßten hier sehr aufwendige, die Entlüftungseinrichtung verteuernde Maßnahmen getroffen werden.

Deshalb ist es Aufgabe der Erfindung, ein Gehäuse für ein Achsgetriebe eines Kraftfahrzeugs mit einem Deckel an seiner Rückseite so zu gestalten, daß das von den drehenden Achsgetriebeteilen abgeschleuderte Öl einerseits über bestimmte Bereiche der Innenwand des Deckels geleitet, andererseits von mindestens einem anderen Bereich der Innenwand des Deckels abgehalten wird, um an diesem eine Entlüftungseinrichtung vorzusehen, die einfach und preiswert ausgeführt werden kann.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung bildet eine in Einbaulage des Getriebes vertikal verlaufende Rippe mit der konkaven Innenwand des Deckels einen Strömungskanal zum Führen des von einem Tellerrad abgeschleuderten Öls. Im verbliebenen Restraum des Deckels formt eine in Einbaulage des Getriebes horizontal verlaufende Rippe mit einem unteren Teil der vertikal verlaufenden Rippe und der Innenwand des Deckels einen weiteren Strömungskanal. In diesem wird das von einem Planetensatz abgeschleuderte Öl geführt. Ein Raum zwischen der horizontal verlaufenden Rippe und einem oberen Teil der vertikal verlaufenden Rippe und der Innenwand des Deckels enthält eine umlaufende, in sich geschlossene Rippe. Diese hält das abgeschleuderte Öl von einer Bohrung für eine Entlüftungseinrichtung ab, die in den Raum innerhalb der umlaufenden Rippe mündet und außerhalb der Innenwand des Deckels nach oben geführt ist.

Das hat den Vorteil, daß von dem Teil der Innenwand des Deckels, in den die Entlüftungsbohrung mündet, durch die vorhandenen Rippen die von den sich drehenden Achsgetriebeteilen abgeschleuderten Ölteilchen abgehalten werden. So ist eine einfache Ausführung der Entlüftungseinrichtung dadurch möglich, daß die Bohrung außerhalb der Innenwand des Deckels in einer vertikalen, zu seiner Querachse parallelen Ebene nach oben führt. An ihrem oberen Ende mündet die Bohrung in eine Querbohrung, die in einer zur Deckelquerachse parallelen horizontalen Ebene verläuft und ins Freie führt.

Wird der Deckel aus Aluminium gegossen, ist es vorteilhaft, die Entlüftungseinrichtung zusammen und einstückig mit dem Deckel zu gießen. In weiteren Bearbeitungsschritten ist es dann zur Herstellung der Entlüftungseinrichtung nur noch notwendig, die beiden Bohrungen am Deckel anzubringen.

Der Deckel aus Aluminiumguß besitzt auf diese Weise die erwähnte einstückig mit ihm gegossene Entlüftungseinrichtung zum leckageölfreien Ableiten des Überdrucks bei Erwärmung des Achsgetriebes im Betrieb. Es müssen im Achsgetriebegehäuse kein Abdeckblech oder sonstige Zusatzeinrichtungen angebracht werden, die die Entlüftungsbohrung so abschirmen, daß das von den Achsgetriebeteilen abgeschleuderte Öl nicht als Öl-Luftgemisch entweicht. Ein solcher Deckel mit gegossener Entlüftungseinrichtung ist einfach gestaltet und preiswert herzustellen.

Bei einer bevorzugten Ausführung der Erfindung ist der Raum, den die umlaufende Rippe einschließt, etwa schlüssellochförmig gestaltet. Eine solche Ausführung der umlaufenden Rippe hat bei Versuchen gezeigt, daß das von den sich drehenden Achsgetriebeteilen abgeschleuderte Öl zuverlässig von der Entlüftungsbohrung abgehalten und entsprechend durch die Entlüftungseinrichtung kein Lecköl in die Umgebung abgegeben wird.

Ein bevorzugtes Ausführungsbeispiel der Erfindung ist in der nachfolgenden Beschreibung und der zugehörigen Zeichnung näher dargestellt. Es zeigen:
- Figur 1: eine Teilansicht der Deckelinnenseite eines Achsgetriebegehäuses und
- Figur 2: eine Teilansicht des Deckels von hinten auf seine Außenseite.

Zur Verdeutlichung der Einbaulage des Deckels sind in die Zeichenebene verschoben Parallelen zur Fahrzeugquerachse A und zur Fahrzeughochachse B angedeutet dargestellt.

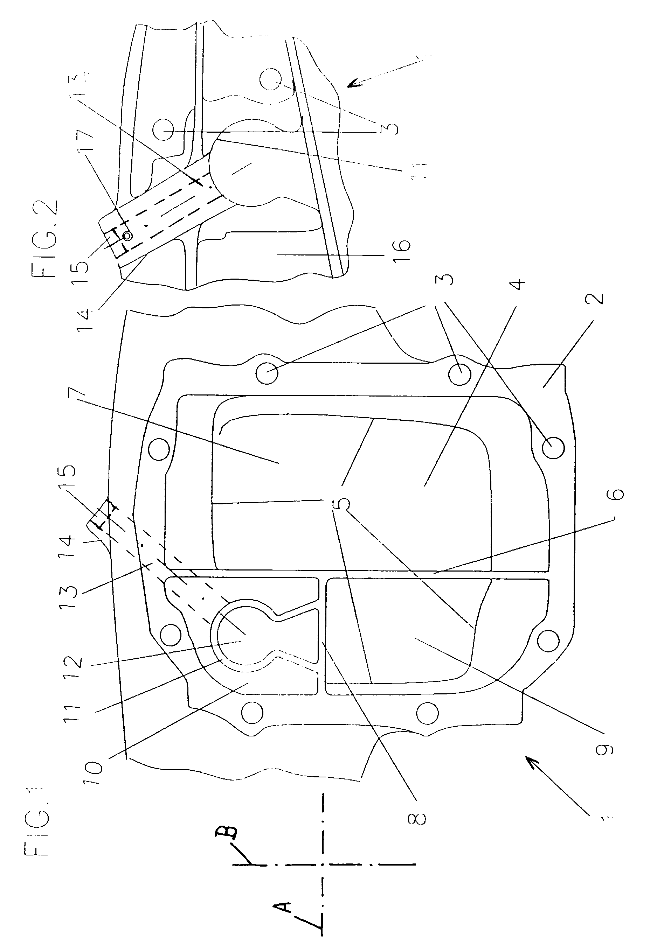

Nach Figur 1 ist ein Deckel 1 eines nicht dargestellten Achsgetriebegehäuses an dessen Rückseite entsprechend dem zitierten Stand der Technik über eine Schraubverbindung angebracht, von der am Deckel 1 die umlaufende Flanschfläche 2 mit den Bohrungen 3 für die nicht dargestellten Schrauben sichtbar ist. Innerhalb der Flanschfläche 2 ist die Innenwand 4 des Deckels 1 konkav ausgebildet, was durch die Sichtkanten 5 in der ebenen Darstellung verdeutlicht wird. Die konkave Innenwand 4 des Deckels 1 ist durch Rippen 6, 8, 11 in vier Bereiche unterteilt. Die vertikal verlaufende Rippe 6 bildet mit der Innenwand 4 des Deckels 1 einen Strömungskanal 7 zum Führen des von einem nicht dargestellten Tellerrad abgeschleuderten Öls. Eine im verbliebenen Restraum des Deckels horizontal verlaufende Rippe 8 bildet mit einem unteren Teil der vertikal verlaufenden Rippe 6 und der Innenwand 4 des Deckels 1 einen weiteren Strömungskanal 9 zum Führen des von einem nicht dargestellten Planetensatz abgeschleuderten Öls. Der verbleibende Raum 10 zwischen der horizontal verlaufenden Rippe 8, einem oberen Teil der vertikal verlaufenden Rippe 6 und der Innenwand 4 des Deckels 1 enthält eine umlaufende, in sich geschlossene Rippe 11, die in etwa schlüssellochförmig gestaltet ist. Sie umschließt mit der horizontal verlaufenden Rippe 8, die den horizontalen unteren Abschnitt der umlaufenden Rippe 11 bildet, einen weiteren Raum 12, an dessen hinterer Innenwand eine durch gestrichelte Linien dargestellte Bohrung 13 einer Entlüftungseinrichtung von oben einmündet. Die Bohrung 13 führt in einem außerhalb der Innenwand 4 des Deckels 1 verlaufenden Gußdom 14 schräg nach oben, wo sie mit einem dichtenden Gewindestift 15 abgeschlossen ist.

Figur 2 zeigt die Lage des Gußdoms 14, der mit dem Deckel 1 in einem Stück gegossen ist. Er führt von der umlaufenden, in sich geschlossenen, etwa schlüssellochförmigen Rippe 11 an der Außenseite 16 des Deckels 1 schräg nach oben. Die in dem Gußdom 14 verlaufende Bohrung 13, die in den in dieser Ansicht nicht sichtbaren von der Rippe 11 umschlossenen Raum 12 mündet, ist durch den abdichtenden Gewindestift 15 von oben verschlossen. Die Bohrung 13 liegt in einer zur Flanschfläche 2 des Deckels 1 parallelen Ebene. An ihrem oberen Ende, etwas unterhalb dem abdichtenden Gewindestift 15, ist eine horizontal verlaufende Querbohrung 17 in dem Gußdom 14 angebracht. Diese stellt die Verbindung der Entlüftungseinrichtung zur Umgebung her, indem sie von der Außenseite 16 des Deckels 1 quer zum Gußdom 14 bis in die Bohrung 13 hineinreicht.

Die umlaufende, in sich geschlossene Rippe 11, die mit der horizontal verlaufenden Rippe 8 den Raum 12 bildet, verhindert, daß das von den drehenden Achsgetriebeteilen abgeschleuderte Öl in die Bohrung 13 der Entlüftungseinrichtung eindringen kann und damit als Lecköl bei Erwärmung des Achsgetriebes im Gußdom 14 hochsteigt und über die Querbohrung 17 in die Umgebung austritt. Dabei bewirken die Strömungskanäle 7 und 9, die von den Rippen 6 und 8 gebildet werden, durch das Ableiten des abgeschleuderten Öls eine Verstärkung der Abschirmwirkung der Rippe 11. Die Lage und die im wesentlichen schlüssellochartige Form der umlaufenden Rippe 11, beeinflußt ebenfalls, wie sich bei Versuchen ergeben hat, die zuverlässige Funktion der Entlüftungseinrichtung.

## Patentansprüche

1. Gehäuse für ein Achsgetriebe eines Kraftfahrzeugs mit einem an seiner Rückseite angeordneten Deckel (1), dessen Innenwand (4) konkav ausgebildet und durch Rippen (6, 8, 11) in verschiedene Bereiche unterteilt ist, dadurch gekennzeichnet, daß eine in Einbaulage des Getriebes vertikal verlaufende Rippe (6) mit der Innenwand (4) des Deckels (1) einen Strömungskanal (7) zum Führen des von einem Tellerrad abgeschleuderten Öls bildet, daß eine horizontal verlaufende Rippe (8) mit einem unteren Teil der vertikal verlaufenden Rippe (6) und der Innenwand (4) des Deckels (1) einen weiteren Strömungskanal (9) zum Führen des von einem Planetensatz abgeschleuderten Öls formt und daß zwischen der horizontal verlaufenden Rippe (8), einem oberen Teil der vertikal verlaufenden Rippe (6) und der Innenwand (4) des Deckels (1) eine umlaufende, in sich geschlossene Rippe (11) vorgesehen ist, in deren umschlossenen Raum eine Entlüftungsbohrung mündet, die im Deckel (1) nach oben zu einer Entlüftungsöffnung führt.

2. Gehäusedeckel nach Anspruch 1, dadurch gekennzeichnet, daß ein Raum (12), den die umlaufende Rippe (11) einschließt, etwa schlüssellochförmig gestaltet ist, wobei die horizontale Rippe (8) den horizontalen unteren Abschnitt der umlaufenden Rippe (11) bildet.

## Claims

1. A case for an axle drive gear of a motor vehicle comprising a cover (1) on its rear, the cover having a concave inner wall (4) and being divided by ribs (6, 8, 11) into various regions, characterised in that a rib (6) which extends vertically when the gear is in the installed position co-operates with the inner wall (4) of the cover (1) to form a flow duct (7) for conveying the oil thrown off from a ring gear; a horizontally extending rib (8) co-operates with a bottom part of the vertical rib (6) and the inner wall (4) of the cover (1) to form a second flow duct (9) for conveying the oil thrown off by a planet system; and a peripheral closed rib (11) is provided between the horizontal rib (8), an upper part of the vertical rib (6) and the inner wall (4) of the cover (1) and encloses a space into which a vent bore opens and leads upwards in the cover (1) to a vent opening.

2. A cover according to claim 1, characterised in that a space (12) enclosing the peripheral rib (11) is approximately keyhole-shaped, the horizontal rib (8) forming the horizontal bottom portion of the peripheral rib (11).

## Revendications

1. Carter pour transmission d'essieu d'un véhicule automobile comprenant sur son côté arrière un couvercle (1) dont la paroi intérieure concave est subdivisée en différentes zones par des nervures (6, 8, 11),
caractérisé en ce que
une nervure (6) verticale en position de montage de la transmission forme avec la paroi intérieure (4) du couvercle (1), un canal d'écoulement (7) pour guider l'huile projetée par la roue solaire,
une nervure horizontale (8) forme avec une partie inférieure de la nervure verticale (6) et la paroi intérieur (4) du couvercle (1), un autre canal d'écoulement (9) pour guider l'huile projetée par un jeu de pignons planétaires, et entre la nervure horizontale (8), une partie supérieure de la nervure verticale (6) et la paroi intérieure (4) du couvercle (1), il est prévu une nervure (11) périphérique, refermée sur elle-même, et dans le volume qu'elle enferme débouche un perçage de ventilation qui remonte dans le couvercle (1) jusqu'à un orifice de ventilation.

2. Carter selon la revendication 1,
caractérisé en ce que
un volume (12) entouré par la nervure (11) a une forme sensiblement en trou de serrure, la nervure horizontale (8) formant le segment inférieur horizontal de la nervure périphérique (11).
